# EUROPEAN PATENT APPLICATION

(11) **EP 4 596 620 A1**
(43) Date of publication of application: **06.08.2025**
(21) Application number: 23872209.4
(22) Date of filing: 22.09.2023
(51) Int. Cl.: C08L 27/06, B32B 5/18, B32B 27/30, B32B 27/40, C08K 5/10, C08L 67/00

(54) **VINYL CHLORIDE RESIN COMPOSITION, VINYL CHLORIDE RESIN MOLDED ARTICLE, AND LAMINATE**

(30) Priority: 29.09.2022 JP 2022156973
(71) Applicant: Zeon Corporation, Tokyo 100-8246 (JP)
(72) Inventor: FUJIWARA, Takanori, Tokyo 100-8246 (JP)
(74) Representative: Maiwald GmbH
(86) International application number: PCT/JP2023/034593
(87) International publication number: WO 2024/070984

(57) **Abstract**

Provided is a vinyl chloride resin composition that is capable of forming a vinyl chloride resin molded product having excellent low-temperature tensile elongation. The vinyl chloride resin composition contains a vinyl chloride resin, a polyester plasticizer having a number-average molecular weight of less than 8,000, and a polyester resin having a number-average molecular weight of 8,000 or more. The vinyl chloride resin composition is preferably used in powder molding.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims, for example.

A vinyl chloride resin molded product that constitutes a surface skin of an automobile interior component such as an automobile instrument panel is produced, for example, by performing molding by a powder molding method such as powder slush molding with respect to a vinyl chloride resin composition that contains a vinyl chloride resin, a plasticizer, and additives (for example, refer to Patent Literature (PTL) 1).

As one specific example, a vinyl chloride resin molded product is produced in PTL 1 through powder slush molding of a vinyl chloride resin composition that contains vinyl chloride resin particles, a plasticizer such as a polyester plasticizer, and additives such as a hydrotalcite stabilizer, a zeolite stabilizer, and a β-diketone.

### CITATION LIST

### Patent Literature

PTL 1: JP2012-197394A

### (Technical Problem)

However, in the case of a vinyl chloride resin molded product that is formed using the vinyl chloride resin composition of the conventional technique described above that contains a polyester plasticizer, there is room for improvement of tensile elongation at low temperature (hereinafter, also referred to as "low-temperature tensile elongation").

Accordingly, one object of the present disclosure is to provide a vinyl chloride resin composition that is capable of forming a vinyl chloride resin molded product having excellent low-temperature tensile elongation.

Another object of the present disclosure is to provide a vinyl chloride resin molded product having excellent low-temperature tensile elongation.

Yet another object of the present disclosure is to provide a laminate including this vinyl chloride resin molded product.

### (Solution to Problem)

The inventor conducted diligent investigation with the aim of solving the problem set forth above. The inventor discovered that a vinyl chloride resin molded product having excellent low-temperature tensile elongation can be formed by using a vinyl chloride resin composition that contains a polyester plasticizer having a number-average molecular weight of less than a specific value and a polyester resin having a number-average molecular weight of not less than a specific value, and, in this manner, completed the present disclosure.

Specifically, with the aim of advantageously solving the problem set forth above, [1] a presently disclosed vinyl chloride resin composition comprises: a vinyl chloride resin; a polyester plasticizer having a number-average molecular weight of less than 8,000; and a polyester resin having a number-average molecular weight of 8,000 or more.

With a vinyl chloride resin composition that contains a vinyl chloride resin, a polyester plasticizer having a number-average molecular weight of less than the specific value set forth above, and a polyester resin having a number-average molecular weight of not less than the specific value set forth above in this manner, it is possible to form a vinyl chloride resin molded product having excellent low-temperature tensile elongation.

Note that the "number-average molecular weight" of a polyester plasticizer and a polyester resin referred to in the present disclosure can be measured by a method described in the EXAMPLES section of the present specification.

[2] In the vinyl chloride resin composition according to the foregoing [1], content of the polyester resin is preferably not less than 0.1 parts by mass and not more than 50 parts by mass relative to 100 parts by mass of the vinyl chloride resin.

When the content of the polyester resin is within the specific range set forth above, low-temperature tensile elongation of a formed vinyl chloride resin molded product can be further improved, and surface stickiness of the vinyl chloride resin molded product can also be suppressed. Moreover, when the content of the polyester resin is within the specific range set forth above, powder fluidity of the vinyl chloride resin composition can be improved.

[3] In the vinyl chloride resin composition according to the foregoing [1] or [2], the polyester resin preferably includes a structural unit derived from a dicarboxylic acid and an alkylene oxide structural unit.

[4] In the vinyl chloride resin composition according to the foregoing [3], the dicarboxylic acid preferably includes an aromatic dicarboxylic acid.

By using an aromatic dicarboxylic acid as a dicarboxylic acid forming a structural unit derived from the dicarboxylic acid in the polyester resin, it is possible to further improve low-temperature tensile elongation of a formed vinyl chloride resin molded product.

[5] In the vinyl chloride resin composition according to the foregoing [4], the aromatic dicarboxylic acid preferably includes at least one of terephthalic acid and isophthalic acid.

By using at least one of terephthalic acid and isophthalic acid as the aromatic dicarboxylic acid, it is possible to even further improve low-temperature tensile elongation of a formed vinyl chloride resin molded product.

[6] In the vinyl chloride resin composition according to any one of the foregoing [3] to [5], the alkylene oxide structural unit preferably includes one or more selected from the group consisting of an ethylene oxide structural unit, a tetramethylene oxide structural unit, and a 2,2-dimethylpropylene oxide structural unit.

When the polyester resin includes any of the specific alkylene oxide structural units set forth above, low-temperature tensile elongation of a formed vinyl chloride resin molded product can be further improved.

[7] In the vinyl chloride resin composition according to any one of the foregoing [3] to [6], the polyester resin preferably includes a polyalkylene oxide region where the alkylene oxide structural unit is consecutively arranged.

When the polyester resin includes a polyalkylene oxide region, low-temperature tensile elongation of a formed vinyl chloride resin molded product can be further improved.

[8] In the vinyl chloride resin composition according to the foregoing [7], a proportion constituted by the alkylene oxide structural unit included in the polyalkylene oxide region is preferably not less than 5 mol% and not more than 80 mol% when all structural units in the polyester resin are taken to be 100 mol%.

When the proportion constituted by the alkylene oxide structural unit included in the polyalkylene oxide region is within the specific range set forth above, low-temperature tensile elongation of a formed vinyl chloride resin molded product can be even further improved, and surface stickiness of the vinyl chloride resin molded product can also be suppressed.

Note that the proportion constituted by each structural unit when all structural units in a polyester resin are taken to be 100 mol% (i.e., the chemical composition of the polyester resin) can be measured by a method described in the EXAMPLES section of the present specification.

[9] In the vinyl chloride resin composition according to any one of the foregoing [1] to [8], content of the polyester plasticizer is preferably not less than 30 parts by mass and not more than 200 parts by mass relative to 100 parts by mass of the vinyl chloride resin.

When the content of the polyester plasticizer is within the specific range set forth above, low-temperature tensile elongation of a formed vinyl chloride resin molded product can be further improved. Moreover, when the content of the polyester plasticizer is within the specific range set forth above, sufficiently high powder fluidity of the vinyl chloride resin composition can be ensured, and heat shrinkage resistance of a formed vinyl chloride resin molded product can also be improved.

[10] The vinyl chloride resin composition according to any one of the foregoing [1] to [9] is preferably used in powder molding.

By using the vinyl chloride resin composition in powder molding, it is easy to obtain a vinyl chloride resin molded product that can be used well as an automobile interior material such as a surface skin for an automobile instrument panel, for example.

[11] The vinyl chloride resin composition according to any one of the foregoing [1] to [10] is preferably used in powder slush molding.

By using the vinyl chloride resin composition in powder slush molding, it is even easier to obtain a vinyl chloride resin molded product that can be used well as an automobile interior material such as a surface skin for an automobile instrument panel, for example.

Moreover, with the aim of advantageously solving the problem set forth above, [12] a presently disclosed vinyl chloride resin molded product is obtained through molding of the vinyl chloride resin composition according to any one of the foregoing [1] to [11].

A vinyl chloride resin molded product that is obtained through molding of the vinyl chloride resin composition set forth above in this manner has excellent low-temperature tensile elongation, and thus can be used well as an automobile interior material.

[13] The vinyl chloride resin molded product according to the foregoing [12] is preferably for a surface skin of an automobile instrument panel.

By using the presently disclosed vinyl chloride resin molded product as a surface skin of an automobile instrument panel, it is possible to produce an automobile instrument panel that has a surface skin having excellent low-temperature tensile elongation.

Furthermore, with the aim of advantageously solving the problem set forth above, [14] a presently disclosed laminate comprises: a foamed polyurethane molded product; and the vinyl chloride resin molded product according to the foregoing [12] or [13].

A laminate that includes a foamed polyurethane molded product and the vinyl chloride resin molded product set forth above has a vinyl chloride resin molded product part with excellent low-temperature tensile elongation.

[15] The laminate according to the foregoing [14] is preferably for an automobile instrument panel.

By using the presently disclosed laminate as an automobile instrument panel in this manner, it is possible to improve low-temperature tensile elongation of a surface skin of the produced automobile instrument panel.

### (Advantageous Effect)

According to the present disclosure, it is possible to provide a vinyl chloride resin composition that is capable of forming a vinyl chloride resin molded product having excellent low-temperature tensile elongation.

Moreover, according to the present disclosure, it is possible to provide a vinyl chloride resin molded product having excellent low-temperature tensile elongation.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

A feature of the presently disclosed vinyl chloride resin composition is that it contains: (a) a vinyl chloride resin; (b) a polyester plasticizer having a number-average molecular weight of less than a specific value (hereinafter, also referred to simply as the "(b) polyester plasticizer"); and (c) a polyester resin having a number-average molecular weight of not less than a specific value (hereinafter, also referred to simply as the "(c) polyester resin").

Note that the presently disclosed vinyl chloride resin composition may optionally further contain plasticizers other than the (b) polyester plasticizer described above (hereinafter, also referred to as "(d) other plasticizers").

Moreover, the presently disclosed vinyl chloride resin composition may optionally further contain additives other than the (a) vinyl chloride resin, (b) polyester plasticizer, (c) polyester resin, and (d) other plasticizers described above.

With the presently disclosed vinyl chloride resin composition, it is possible to form a vinyl chloride resin molded product having excellent low-temperature tensile elongation.

Consequently, by using the presently disclosed vinyl chloride resin composition, it is possible to obtain a vinyl chloride resin molded product that is suitable as an automobile interior material, such as a surface skin for an automobile instrument panel or a surface skin for a door trim, having excellent fogging resistance.

Note that from a viewpoint of easily obtaining a vinyl chloride resin molded product that can favorably be used as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

### <<Vinyl chloride resin particles>>

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. When the average degree of polymerization of the vinyl chloride resin forming the vinyl chloride resin particles is not less than any of the lower limits set forth above, sufficiently high physical strength of a vinyl chloride resin molded product formed using the vinyl chloride resin composition can be ensured while also improving tensile characteristics (particularly tensile elongation) of the vinyl chloride resin molded product, for example. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. On the other hand, when the average degree of polymerization of the vinyl chloride resin forming the vinyl chloride resin particles is not more than any of the upper limits set forth above, meltability of the vinyl chloride resin composition can be improved.

The average degree of polymerization of the vinyl chloride resin forming the vinyl chloride resin particles may be 1,400 or more, may be 1,500 or more, or may be 1,600 or more, and may be 1,600 or less, may be 1,500 or less, or may be 1,400 or less.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. When the average particle diameter of the vinyl chloride resin particles is not less than any of the lower limits set forth above, powder fluidity of the vinyl chloride resin composition can be improved. On the other hand, when the average particle diameter of the vinyl chloride resin particles is not more than any of the upper limits set forth above, meltability of the vinyl chloride resin composition can be improved, and surface smoothness of a vinyl chloride resin molded product formed using the vinyl chloride resin composition can be increased.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 70 mass% or more, and more preferably 80 mass% or more, can be set as 100 mass%, and is preferably 95 mass% or less, and more preferably 90 mass% or less. When the proportional content of the vinyl chloride resin particles in the (a) vinyl chloride resin is not less than any of the lower limits set forth above, sufficiently high physical strength of a vinyl chloride resin molded product formed using the vinyl chloride resin composition can be ensured while also improving tensile elongation of the vinyl chloride resin molded product. On the other hand, when the proportional content of the vinyl chloride resin particles in the (a) vinyl chloride resin is not more than any of the upper limits set forth above, powder fluidity of the vinyl chloride resin composition can be improved.

### <<Vinyl chloride resin fine particles>>

In the vinyl chloride resin composition, the vinyl chloride resin fine particles typically function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles that serve as a dusting agent is not less than any of the lower limits set forth above, powder fluidity of the vinyl chloride resin composition can be improved, and tensile elongation of a vinyl chloride resin molded product formed using the vinyl chloride resin composition can also be improved. On the other hand, when the average degree of polymerization of the vinyl chloride resin forming the vinyl chloride resin fine particles is not more than any of the upper limits set forth above, meltability of the vinyl chloride resin composition can be improved, and surface smoothness of a vinyl chloride resin molded product formed using the vinyl chloride resin composition can be increased.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. When the average particle diameter of the vinyl chloride resin fine particles is not less than any of the lower limits set forth above, the vinyl chloride resin fine particles are not too small to function as a dusting agent, for example, and powder fluidity of the vinyl chloride resin composition can be improved. On the other hand, when the average particle diameter of the vinyl chloride resin fine particles is not more than any of the upper limits set forth above, meltability of the vinyl chloride resin composition can be improved, and surface smoothness of a formed vinyl chloride resin molded product can be increased.

### [Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. When the proportional content of the vinyl chloride resin fine particles in the (a) vinyl chloride resin is not less than any of the lower limits set forth above, powder fluidity of the vinyl chloride resin composition can be improved. On the other hand, when the proportional content of the vinyl chloride resin fine particles in the (a) vinyl chloride resin is not more than any of the upper limits set forth above, physical strength of a vinyl chloride resin molded product formed using the vinyl chloride resin composition can be increased.

### <(b) Polyester plasticizer>

The (b) polyester plasticizer is a component that can impart flexibility to a vinyl chloride resin molded product formed using the vinyl chloride resin composition and that can improve tensile characteristics (particularly low-temperature tensile elongation) of the vinyl chloride resin molded product. Moreover, in a situation in which a laminate is produced by lining a vinyl chloride resin molded product formed using the vinyl chloride resin composition with a foamed polyurethane molded product, the use of the (b) polyester plasticizer as a plasticizer means that the (b) polyester plasticizer has a low tendency to migrate from the vinyl chloride resin molded product to the foamed polyurethane molded product even at high temperature, and thus can improve heat shrinkage resistance of the vinyl chloride resin molded product.

Polyesters such as a polyester including a structural unit derived from adipic acid (adipic acid polyester), a polyester including a structural unit derived from sebacic acid (sebacic acid polyester), and a polyester including a structural unit derived from phthalic acid (phthalic acid polyester) can be used without any specific limitations as the (b) polyester plasticizer. Note that one of these polyesters may be used individually, or two or more of these polyesters may be used as a mixture in a freely selected ratio.

In particular, it is preferable to use an adipic acid polyester (polyester including a structural unit derived from adipic acid) as the (b) polyester plasticizer from a viewpoint of further increasing heat shrinkage resistance of a vinyl chloride resin molded product.

### <<Number-average molecular weight (Mn)>>

The number-average molecular weight (Mn) of the (b) polyester plasticizer is required to be less than 8,000, and is preferably 7,000 or less, more preferably 6,000 or less, even more preferably 5,000 or less, and further preferably 4,000 or less.

When the number-average molecular weight (Mn) of the (b) polyester plasticizer is less than 8,000, low-temperature tensile elongation of a formed vinyl chloride resin molded product can be sufficiently improved. Moreover, when the number-average molecular weight of the (b) polyester plasticizer is not more than any of the upper limits set forth above, low-temperature tensile elongation of a formed vinyl chloride resin molded product can be further improved.

Note that although no specific limitations are placed on the lower limit for the number-average molecular weight (Mn) of the (b) polyester plasticizer, the number-average molecular weight (Mn) is preferably 500 or more, more preferably 1,000 or more, and even more preferably 2,000 or more, for example.

### <<Viscosity>>

The viscosity of the (b) polyester plasticizer is preferably 500 mPa·s or more, and more preferably 1,000 mPa·s or more, and is preferably 8,000 mPa·s or less, more preferably 5,000 mPa·s or less, and even more preferably 4,000 mPa·s or less.

Note that the "viscosity" can be measured in accordance with JIS Z8803 at a temperature of 23°C.

### <<Content>>

The content of the (b) polyester plasticizer in the vinyl chloride resin composition is preferably 30 parts by mass or more, more preferably 50 parts by mass or more, even more preferably 70 parts by mass or more, further preferably 80 parts by mass or more, and even further preferably 85 parts by mass or more relative to 100 parts by mass of the (a) vinyl chloride resin, and is preferably 200 parts by mass or less, more preferably 180 parts by mass or less, even more preferably 150 parts by mass or less, further preferably 130 parts by mass or less, and even further preferably 110 parts by mass or less relative to 100 parts by mass of the (a) vinyl chloride resin. When the content of the (b) polyester plasticizer in the vinyl chloride resin composition is not less than any of the lower limits set forth above, low-temperature tensile elongation and heat shrinkage resistance of a formed vinyl chloride resin molded product can be further improved. On the other hand, when the content of the (b) polyester plasticizer in the vinyl chloride resin composition is not more than any of the upper limits set forth above, sufficiently high powder fluidity of the vinyl chloride resin composition can be ensured.

Note that the content of the (b) polyester plasticizer in the vinyl chloride resin composition may be 90 parts by mass or more, may be 95 parts by mass or more, or may be 100 parts by mass or more relative to 100 parts by mass of the (a) vinyl chloride resin, and may be 100 parts by mass or less, may be 95 parts by mass or less, or may be 90 parts by mass or less relative to 100 parts by mass of the (a) vinyl chloride resin.

### <(c) Polyester resin>

The (c) polyester resin is a component that can improve low-temperature tensile elongation (particularly low-temperature tensile elongation after heating) of a vinyl chloride resin molded product that is formed using the vinyl chloride resin composition.

### <<Number-average molecular weight (Mn)>>

The number-average molecular weight (Mn) of the (c) polyester resin is required to be 8,000 or more, is preferably 10,000 or more, more preferably 15,000 or more, even more preferably 20,000 or more, further preferably 25,000 or more, even further preferably 30,000 or more, and particularly preferably 33,000 or more, and is preferably 100,000 or less, more preferably 80,000 or less, even more preferably 60,000 or less, further preferably 50,000 or less, and even further preferably 43,000 or less.

When the number-average molecular weight (Mn) of the (c) polyester resin is 8,000 or more, low-temperature tensile elongation of a formed vinyl chloride resin molded product can be sufficiently improved. Moreover, when the number-average molecular weight (Mn) of the (c) polyester plasticizer is not less than any of the lower limits set forth above, powder fluidity of the vinyl chloride resin composition can be improved, low-temperature tensile elongation of a formed vinyl chloride resin molded product can be further improved, and surface stickiness of the vinyl chloride resin molded product can be suppressed. On the other hand, when the number-average molecular weight (Mn) of the (c) polyester resin is not more than any of the upper limits set forth above, low-temperature tensile elongation of a formed vinyl chloride resin molded product can be further improved, and surface stickiness of the vinyl chloride resin molded product can also be suppressed.

Note that the number-average molecular weight (Mn) of the (c) polyester resin may be 35,000 or more, or may be 38,000 or more, and may be 38,000 or less, may be 35,000 or less, may be 33,000 or less, or may be 30,000 or less.

### <<Weight-average molecular weight (Mw)>>

The weight-average molecular weight (Mw) of the (c) polyester resin is preferably 9,000 or more, preferably 12,000 or more, more preferably 18,000 or more, even more preferably 20,000 or more, further preferably 40,000 or more, even further preferably 50,000 or more, and particularly preferably 60,000 or more, and is preferably 150,000 or less, more preferably 120,000 or less, even more preferably 100,000 or less, further preferably 90,000 or less, and even further preferably 80,000 or less.

When the weight-average molecular weight (Mw) of the (c) polyester resin is not less than any of the lower limits set forth above, powder fluidity of the vinyl chloride resin composition can be improved, low-temperature tensile elongation of a formed vinyl chloride resin molded product can be further improved, and surface stickiness of the vinyl chloride resin molded product can be suppressed. On the other hand, when the weight-average molecular weight (Mw) of the (c) polyester resin is not more than any of the upper limits set forth above, low-temperature tensile elongation of a formed vinyl chloride resin molded product can be further improved, and surface stickiness of the vinyl chloride resin molded product can also be suppressed.

Moreover, the weight-average molecular weight (Mw) of the (c) polyester resin may be 63,000 or more, or may be 65,000 or more, and may be 65,000 or less, may be 63,000 or less, may be 60,000 or less, or may be 50,000 or less.

Note that the "weight-average molecular weight" of the (c) polyester resin referred to in the present disclosure can be measured by a method described in the EXAMPLES section of the present specification.

### <<Chemical composition>>

Although no specific limitations are made, it is preferable that the (c) polyester resin includes a structural unit derived from a dicarboxylic acid and an alkylene oxide structural unit.

Moreover, the (c) polyester resin can, for example, be obtained through an esterification reaction and polycondensation of a dicarboxylic acid with a glycol.

### [Structural unit derived from dicarboxylic acid]

The structural unit derived from a dicarboxylic acid in the (c) polyester resin is a repeating unit that is composed of a structure formed by a dicarboxylic acid.

Examples of dicarboxylic acids that can form the structural unit (repeating unit) derived from a dicarboxylic acid in the (c) polyester resin include aromatic dicarboxylic acids such as terephthalic acid, isophthalic acid, and naphthalenedicarboxylic acid; aliphatic dicarboxylic acids such as adipic acid, azelaic acid, sebacic acid, and 1,4-cyclohexanedicarboxylic acid; and so forth.

Note that one of these dicarboxylic acids may be used individually, or two or more of these dicarboxylic acids may be used in combination in a freely selected ratio.

Moreover, from a viewpoint of further improving low-temperature tensile elongation of a formed vinyl chloride resin molded product, it is preferable to use at least an aromatic dicarboxylic acid as a dicarboxylic acid, more preferable to use at least one of terephthalic acid and isophthalic acid as a dicarboxylic acid, even more preferable to use at least isophthalic acid as a dicarboxylic acid, and further preferable to use terephthalic acid and isophthalic acid together as dicarboxylic acids.

### [Alkylene oxide structural unit]

The alkylene oxide structural unit is a repeating unit that is composed of only an alkylene oxide structure represented by formula (I): 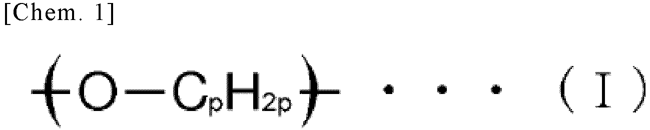 [p is an integer of 1 or more].

From a viewpoint of further improving low-temperature tensile elongation of a formed vinyl chloride resin molded product, p in the preceding formula (I) is preferably 2 or more, more preferably 3 or more, and even more preferably 4 or more, is preferably 10 or less, more preferably 8 or less, even more preferably 6 or less, and further preferably 5 or less, and is particularly preferably 4.

Moreover, from a viewpoint of further improving low-temperature tensile elongation of a formed vinyl chloride resin molded product, an ethylene oxide structural unit, a tetramethylene oxide structural unit, and a 2,2-dimethylpropylene oxide structural unit are preferable, a tetramethylene oxide structural unit and a 2,2-dimethylpropylene oxide structural unit are more preferable, and a tetramethylene oxide structural unit is even more preferable as the alkylene oxide structural unit included in the (c) polyester resin.

The alkylene oxide structural unit in the (c) polyester resin is, for example, formed by a glycol that is used in production of the (c) polyester resin.

Examples of glycols that can form the alkylene oxide structural unit in the (c) polyester resin include:
alkylene glycols represented by formula (II):
   [Chem. 2]

   HO-CₚH₂ₚ-OH ··· (II)

   [p is the same as described above]; and
polyoxyalkylene glycols (also referred to as "polyalkylene glycols", "polyalkylene ether glycols", "polyalkylene oxides", etc.) represented by formula (III): 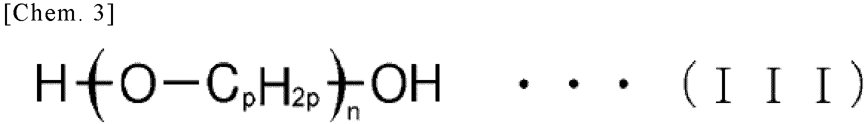 [n is an integer of 2 or more and p is the same as described above].

Note that one of these glycols may be used individually, or two or more of these glycols may be used in combination in a freely selected ratio.

Examples of alkylene glycols that can be used include linear alkylene glycols such as ethylene glycol, 1,3-propanediol, 1,4-butanediol, 1,5-pentanediol, and 1,6-hexanediol; and branched alkylene glycols such as 2-methylpropanediol, 2,3-dimethylbutanediol, butylethylpropanediol, and neopentyl glycol. One of these alkylene glycols may be used individually, or two or more of these alkylene glycols may be used in combination in a freely selected ratio. In particular, from a viewpoint of further improving low-temperature tensile elongation of a formed vinyl chloride resin molded product, it is preferable to use ethylene glycol, 1,4-butanediol, and neopentyl glycol, and more preferable to use 1,4-butanediol as an alkylene glycol.

Examples of polyoxyalkylene glycols that can be used include diethylene glycol, polyethylene glycol, polyoxytetramethylene glycol (also referred to as "polytetramethylene ether glycol", etc.), polyoxypropylene glycol, a copolymer of tetramethylene oxide (tetrahydrofuran) and neopentylene oxide, and a copolymer of tetramethylene oxide (tetrahydrofuran) and propylene oxide. One of these polyoxyalkylene glycols may be used individually, or two or more of these polyoxyalkylene glycols may be used in combination in a freely selected ratio. In particular, from a viewpoint of further improving low-temperature tensile elongation of a formed vinyl chloride resin molded product, it is preferable to use diethylene glycol and polyoxytetramethylene glycol, and more preferable to use polyoxytetramethylene glycol as a polyoxyalkylene glycol.

Although no specific limitations are made, it is normally the case that at least an alkylene glycol is used as a glycol. Moreover, from a viewpoint of further improving low-temperature tensile elongation of a formed vinyl chloride resin molded product, it is preferable that an alkylene glycol and a polyoxyalkylene glycol are used together.

In a case in which at least a dicarboxylic acid and an alkylene glycol as a glycol are used in production of the (c) polyester resin, the resultant (c) polyester resin includes at least a polyester region where structural units derived from the dicarboxylic acid and alkylene oxide structural units derived from the alkylene glycol are alternately arranged.

Moreover, in a case in which a polyoxyalkylene glycol is further used as a glycol in production of the (c) polyester resin, the resultant (c) polyester resin further includes a polyalkylene oxide region where alkylene oxide structural units derived from the polyoxyalkylene glycol are consecutively arranged.

Although it may be the case that the (c) polyester resin only includes a polyester region, it is preferable that the (c) polyester resin further includes a polyalkylene oxide region in addition to a polyester region from a viewpoint of further improving low-temperature tensile elongation of a formed vinyl chloride resin molded product.

### [Proportion of alkylene glycol-derived alkylene oxide structural units]

The proportion constituted by alkylene oxide structural units that are derived from an alkylene glycol (i.e., that are included in a polyester region) in the (c) polyester resin when all structural units (all repeating units) in the (c) polyester resin are taken to be 100 mol% can be set as 50 mol% or less, for example, is preferably 40 mol% or less, more preferably 35 mol% or less, even more preferably 30 mol% or less, and even more preferably 25 mol% or less, and is preferably 10 mol% or more, and more preferably 15 mol% or more. When the proportion constituted by alkylene oxide structural units that are derived from an alkylene glycol (i.e., that are included in a polyester region) in the (c) polyester resin is not more than any of the upper limits set forth above, low-temperature tensile elongation of a formed vinyl chloride resin molded product can be further improved, and surface stickiness of the vinyl chloride resin molded product can also be suppressed. On the other hand, when the proportion constituted by alkylene oxide structural units that are derived from an alkylene glycol (i.e., that are included in a polyester region) in the (c) polyester resin is not less than any of the lower limits set forth above, low-temperature tensile elongation of a formed vinyl chloride resin molded product can be further improved.

### [Proportion of polyoxyalkylene glycol-derived alkylene oxide structural units]

The proportion constituted by alkylene oxide structural units that are derived from a polyoxyalkylene glycol (i.e., that are included in a polyalkylene oxide region) in the (c) polyester resin when all structural units (all repeating units) in the (c) polyester resin are taken to be 100 mol% can be set as 0 mol% or more, is preferably 5 mol% or more, more preferably 10 mol% or more, even more preferably 20 mol% or more, further preferably 40 mol% or more, and even further preferably 50 mol% or more, and is preferably 80 mol% or less, and more preferably 70 mol% or less. When the proportion constituted by alkylene oxide structural units that are derived from a polyoxyalkylene glycol (i.e., that are included in a polyalkylene oxide region) in the (c) polyester resin is not less than any of the lower limits set forth above, low-temperature tensile elongation of a formed vinyl chloride resin molded product can be even further improved, and surface stickiness of the vinyl chloride resin molded product can also be suppressed. On the other hand, when the proportion constituted by alkylene oxide structural units that are derived from a polyoxyalkylene glycol (i.e., that are included in a polyalkylene oxide region) in the (c) polyester resin is not more than any of the upper limits set forth above, low-temperature tensile elongation of a formed vinyl chloride resin molded product can be even further improved.

### [Proportion of dicarboxylic acid-derived structural units]

The proportion constituted by structural units that are derived from a dicarboxylic acid in the (c) polyester resin when all structural units (all repeating units) in the (c) polyester resin are taken to be 100 mol% can be set as 50 mol% or less, for example, is preferably 40 mol% or less, more preferably 35 mol% or less, even more preferably 30 mol% or less, and even more preferably 25 mol% or less, and is preferably 10 mol% or more, and more preferably 15 mol% or more. When the proportion constituted by structural units that are derived from a dicarboxylic acid in the (c) polyester resin is not more than any of the upper limits set forth above, low-temperature tensile elongation of a formed vinyl chloride resin molded product can be further improved, and surface stickiness of the vinyl chloride resin molded product can also be suppressed. On the other hand, when the proportion constituted by structural units that are derived from a dicarboxylic acid in the (c) polyester resin is not less than any of the lower limits set forth above, low-temperature tensile elongation of a formed vinyl chloride resin molded product can be further improved.

### <<Crystallinity>>

The (c) polyester resin may be a crystalline polyester, may be an amorphous polyester, or may be a mixture of a crystalline polyester and an amorphous polyester.

From a viewpoint of further improving low-temperature tensile elongation of a formed vinyl chloride resin molded product and suppressing surface stickiness of the vinyl chloride resin molded product, the (c) polyester resin is preferably a crystalline polyester. In a case in which the (c) polyester resin is a crystalline polyester, the (c) polyester resin has a melting point.

### <<Melting point>>

The melting point of the (c) polyester resin is preferably 85°C or higher, more preferably 95°C or higher, even more preferably 100°C or higher, further preferably 110°C or higher, and even further preferably 120°C or higher, and is preferably 180°C or lower, more preferably 150°C or lower, and even more preferably 135°C or lower.

When the melting point of the (c) polyester resin is within any of the specific ranges set forth above, low-temperature tensile elongation of a formed vinyl chloride resin molded product can be even further improved, and surface stickiness of the vinyl chloride resin molded product can also be further suppressed.

### <<Production method>>

A commonly known method (for example, a method described in JP-H10-182954A) can be adopted as the production method of the (c) polyester resin. For example, the (c) polyester resin can be produced by performing an esterification reaction of a dicarboxylic acid and a glycol such as described above at 150°C to 250°C and subsequently performing polycondensation under reduced pressure at 230°C to 300°C. Alternatively, the (c) polyester resin can be produced by using a derivative, such as a dimethyl ester, of a dicarboxylic acid such as described above and a glycol to perform an ester exchange reaction at 150°C to 250°C and subsequently performing polycondensation under reduced pressure at 230°C to 300°C.

### <<Content>>

The content of the (c) polyester resin in the vinyl chloride resin composition is preferably 0.1 parts by mass or more, more preferably 1 part by mass or more, even more preferably 2 parts by mass or more, further preferably 3 parts by mass or more, even further preferably 4 parts by mass or more, yet further preferably 5 parts by mass or more, and particularly preferably 7 parts by mass or more relative to 100 parts by mass of the (a) vinyl chloride resin, and is preferably 50 parts by mass or less, more preferably 30 parts by mass or less, even more preferably 20 parts by mass or less, further preferably 15 parts by mass or less, even further preferably 12 parts by mass or less, and yet further preferably 10 parts by mass or less relative to 100 parts by mass of the (a) vinyl chloride resin.

When the content of the (c) polyester resin in the vinyl chloride resin composition is not less than any of the lower limits set forth above, low-temperature tensile elongation of a formed vinyl chloride resin molded product can be further improved. Moreover, when the content of the (c) polyester resin in the vinyl chloride resin composition is not less than any of the lower limits set forth above, powder fluidity of the vinyl chloride resin composition can be improved, and surface stickiness of a formed vinyl chloride resin molded product can also be suppressed. On the other hand, when the content of the (c) polyester resin in the vinyl chloride resin composition is not more than any of the upper limits set forth above, sufficiently high powder fluidity of the vinyl chloride resin composition can be ensured, and low-temperature tensile elongation of a formed vinyl chloride resin molded product can also be further improved.

The content of the (c) polyester resin in the vinyl chloride resin composition is preferably 0.1 parts by mass or more, more preferably 1 part by mass or more, even more preferably 2 parts by mass or more, further preferably 3 parts by mass or more, even further preferably 4 parts by mass or more, yet further preferably 5 parts by mass or more, and particularly preferably 7 parts by mass or more relative to 100 parts by mass of the (b) polyester plasticizer, and is preferably 50 parts by mass or less, more preferably 30 parts by mass or less, even more preferably 20 parts by mass or less, further preferably 15 parts by mass or less, even further preferably 12 parts by mass or less, and yet further preferably 10 parts by mass or less relative to 100 parts by mass of the (b) polyester plasticizer.

When the content of the (c) polyester resin in the vinyl chloride resin composition is not less than any of the lower limits set forth above, low-temperature tensile elongation of a formed vinyl chloride resin molded product can be further improved. Moreover, when the content of the (c) polyester resin in the vinyl chloride resin composition is not less than any of the lower limits set forth above, powder fluidity of the vinyl chloride resin composition can be improved, and surface stickiness of a formed vinyl chloride resin molded product can also be suppressed. On the other hand, when the content of the (c) polyester resin in the vinyl chloride resin composition is not more than any of the upper limits set forth above, sufficiently high powder fluidity of the vinyl chloride resin composition can be ensured, and low-temperature tensile elongation of a formed vinyl chloride resin molded product can also be further improved.

### <(d) Other plasticizers>

The presently disclosed vinyl chloride resin composition may optionally further contain (d) other plasticizers in addition to the (b) polyester plasticizer described above.

Specific examples of (d) other plasticizers include plasticizers other than the above-described (b) polyester plasticizer that are described in WO2016/098344A1. In particular, from a viewpoint of further improving low-temperature tensile elongation of a formed vinyl chloride resin molded product, it is preferable to use epoxidized vegetable oil, and more preferable to use epoxidized soybean oil.

The content of (d) other plasticizers in the vinyl chloride resin composition is not specifically limited but can be set as not less than 0 parts by mass and not more than 15 parts by mass relative to 100 parts by mass of the (a) vinyl chloride resin.

Moreover, from a viewpoint of even further improving low-temperature tensile elongation of a formed vinyl chloride resin molded product, in a case in which epoxidized vegetable oil such as epoxidized soybean oil is used as (d) another plasticizer, the content of the epoxidized vegetable oil as (d) another plasticizer is preferably 2 parts by mass or more, more preferably 3 parts by mass or more, and even more preferably 4 parts by mass or more relative to 100 parts by mass of the (a) vinyl chloride resin, and is preferably 10 parts by mass or less, and more preferably 7 parts by mass or less relative to 100 parts by mass of the (a) vinyl chloride resin.

The content of (d) other plasticizers in the vinyl chloride resin composition is not specifically limited but can be set as not less than 0 parts by mass and not more than 15 parts by mass relative to 100 parts by mass of the (b) polyester plasticizer.

Moreover, from a viewpoint of even further improving low-temperature tensile elongation of a formed vinyl chloride resin molded product, in a case in which epoxidized vegetable oil such as epoxidized soybean oil is used as (d) another plasticizer, the content of the epoxidized vegetable oil as (d) another plasticizer is preferably 2 parts by mass or more, more preferably 3 parts by mass or more, and even more preferably 4 parts by mass or more relative to 100 parts by mass of the (b) polyester plasticizer, and is preferably 10 parts by mass or less, and more preferably 7 parts by mass or less relative to 100 parts by mass of the (b) polyester plasticizer.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts of these additives can also be the same as described in WO2016/098344A1.

The presently disclosed vinyl chloride resin composition may further contain an amide compound and silicone oil as additives.

### <<Amide compound>>

The amide compound is a component that can improve demolding ability of a formed vinyl chloride resin molded product.

The amide compound is a compound that includes an amide group and may, for example, be indicated by the following formula (1).

R¹(NR²COR³)ₙ (1)

[In formula (1), n is an integer of not less than 2 and not more than 6, R¹ is an n-valent hydrocarbon group, R² is a monovalent hydrocarbon group or hydrogen, R³ is a monovalent hydrocarbon group, the n-number of R² may be the same as or different from one another, and the n-number of R³ may be the same as or different from one another.] In other words, the amide compound may, for example, have a structure resulting from the n-number of hydrogens of a hydrocarbon each being replaced by an amide group indicated by -NR²COR³.

In formula (1), n is an integer of not less than 2 and not more than 6, and may be an integer of not less than 2 and not more than 3, or may be 2, for example.

R¹ in formula (1) is an n-valent hydrocarbon group and may be an n-valent aliphatic hydrocarbon group or may be an n-valent aromatic hydrocarbon group.

The number of carbons in R¹ may be 1 or more, may be 2 or more, may be 8 or less, or may be 6 or less, for example.

R¹ may, for example, be a methylene group, a methylmethylene group, an ethylene group (dimethylene group), a dimethylmethylene group, an isopropylene group, a trimethylene group, an isobutylene group, a tetramethylene group, a hexamethylene group, or the like.

R² in formula (1) is a monovalent hydrocarbon group or hydrogen, and the n-number of R² may be the same as or different from one another. The monovalent hydrocarbon group of R² may be a monovalent aliphatic hydrocarbon group or may be a monovalent aromatic hydrocarbon group. The monovalent aliphatic hydrocarbon group may, for example, be a monovalent chain-type aliphatic hydrocarbon group. Moreover, the monovalent aliphatic hydrocarbon group may be a saturated aliphatic hydrocarbon group or may be an unsaturated aliphatic hydrocarbon group.

Furthermore, the number of carbons in the hydrocarbon group of R² may be not less than 1 and not more than 2, for example.

R² may, for example, be hydrogen, a methyl group, or an ethyl group.

At least one of the n-number of R² may be hydrogen, or all of the n-number of R² may be hydrogen.

R³ in formula (1) is a monovalent hydrocarbon group, and the n-number of R³ may be the same as or different from one another. In other words, a saturated hydrocarbon group of R³ and an unsaturated hydrocarbon group of R³ may be present together in a single molecule of the (e) amide compound, just an unsaturated hydrocarbon group of R³ may be present in a single molecule of the (e) amide compound, or just a saturated hydrocarbon group of R³ may be present in a single molecule of the (e) amide compound.

The saturated hydrocarbon group of R³ may be a monovalent chain-type saturated aliphatic hydrocarbon group, for example.

Moreover, the number of carbons in the saturated hydrocarbon group of R³ may be 11 or more, may be 13 or more, may be 15 or more, may be 23 or less, may be 21 or less, may be 19 or less, or may be 17.

The saturated hydrocarbon group of R³ may, for example, be CH₃(CH₂)₁₀-, CH₃(CH₂)₁₂-, CH₃(CH₂)₁₄-, CH₃(CH₂)₁₆-, CH₃(CH₂)₁₈-, CH₃(CH₂)₂₀-, CH₃(CH₂)₂₂-, or the like.

The unsaturated hydrocarbon group of R³ may be a monovalent chain-type unsaturated aliphatic hydrocarbon group, for example.

Moreover, the number of carbons included in the unsaturated hydrocarbon group of R³ may be 11 or more, may be 13 or more, may be 15 or more, may be 23 or less, may be 21 or less, may be 19 or less, or may be 17.

The unsaturated hydrocarbon group of R³ may, for example, be an unsaturated hydrocarbon group that includes a carbon-carbon double bond such as a mono-unsaturated hydrocarbon group (CH₃(CH₂)₇CH=CH(CH₂)₇-, CH₃(CH₂)₇CH=CH(CH₂)₁₁-, etc.), a di-unsaturated hydrocarbon group (CH₃(CH₂)₄(CH=CHCH₂)₂(CH₂)₆-, etc.), a tri-unsaturated hydrocarbon group (CH₃CH₂(CH=CHCH₂)₃(CH₂)₆-, etc.), a tetra-unsaturated hydrocarbon group, a penta-unsaturated hydrocarbon group, or a hexa-unsaturated hydrocarbon group; or an unsaturated hydrocarbon group that includes a carbon-carbon triple bond.

More specifically, the amide compound may, for example, be ethylene bisoleamide (particularly dimethylene bisoleamide), ethylene biserucamide, hexamethylene bisoleamide, ethylene bislauramide, ethylene bisstearamide (particularly dimethylene bisstearamide), ethylene bispalmitamide, hexamethylene bisstearamide, or the like.

The content of the amide compound in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (a) vinyl chloride resin.

Moreover, the content of the amide compound in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (b) polyester plasticizer.

It may of course alternatively be the case that the presently disclosed vinyl chloride resin composition does not contain an amide compound.

### <<Silicone oil>>

The silicone oil is a component that can improve powder fluidity of the vinyl chloride resin composition and that can also suppress surface stickiness of a formed vinyl chloride resin molded product. Unmodified silicone oil and/or modified silicone may be used as the silicone oil.

The content of the silicone oil in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (a) vinyl chloride resin.

Moreover, the content of the silicone oil in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (b) polyester plasticizer.

It may of course alternatively be the case that the presently disclosed vinyl chloride resin composition does not contain silicone oil.

### <Production method of vinyl chloride resin composition>

The presently disclosed vinyl chloride resin composition can be produced by mixing the components described above.

The mixing method of the above-described (a) vinyl chloride resin, (b) polyester plasticizer, (c) polyester resin, and (d) other plasticizers and various additives that are further compounded as necessary may be a method in which components other than a dusting agent (inclusive of vinyl chloride resin fine particles) are mixed by dry blending and then the dusting agent is subsequently added and mixed, for example, but is not specifically limited thereto. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition>

The obtained vinyl chloride resin composition can be suitably used in powder molding, and more suitably used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least the (a) vinyl chloride resin, the (b) polyester plasticizer, and the (c) polyester resin. Moreover, the presently disclosed vinyl chloride resin molded product has excellent low-temperature tensile elongation.

Consequently, the presently disclosed vinyl chloride resin molded product can suitably be used as an automobile interior material such as a surface skin of an automobile instrument panel.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

Moreover, the presently disclosed laminate includes a vinyl chloride resin molded product that is formed using the presently disclosed vinyl chloride resin composition and that has excellent low-temperature tensile elongation, for example. Therefore, the presently disclosed laminate may suitably be used as an automobile interior material forming an automobile interior component (particularly an automobile instrument panel).

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, the following methods were used to measure and evaluate the number-average molecular weight and weight-average molecular weight of a polyester plasticizer and a polyester resin, the melting point and chemical composition of a polyester resin, the powder fluidity of a vinyl chloride resin composition, and the low-temperature tensile elongation and surface stickiness of a vinyl chloride resin molded product (vinyl chloride resin molded sheet).

### <Number-average molecular weight and weight-average molecular weight>

The number-average molecular weight (Mn) and weight-average molecular weight (Mw) of a polyester plasticizer and a polyester resin were each determined as a polystyrene-equivalent value by gel permeation chromatography (GPC) with tetrahydrofuran (THF) as a solvent.

### <Melting point of polyester resin>

The melting point of a polyester resin was measured in a differential scanning calorimeter DSC7000X produced by Hitachi High-Tech Science Corporation by loading 5.0 mg of the polyester resin as a measurement sample into an aluminum pan, pressing a lid onto the pan to seal the pan, performing heating from 20°C to 250°C at 10°C/min with 5 minutes of holding at 250°C so as to completely melt the sample, subsequently performing cooling to 0°C at 20°C/min with 5 minutes of holding at 0°C, and subsequently performing reheating to 250°C at 20°C/min. A heat absorption peak on the resultant thermogram curve was taken to be the melting point of the polyester resin.

### <Chemical composition of polyester resin>

The chemical composition of a polyester resin (i.e., the proportion constituted by each structural unit when all structural units in the polyester resin are taken to be 100 mol%) was calculated from proton integration ratios determined by ¹H-NMR (nuclear magnetic resonance). Note that a measurement sample prepared by dissolving the polyester resin in deuterated chloroform as a solvent was used in the ¹H-NMR.

### <Powder fluidity>

A vinyl chloride resin composition obtained in each example or comparative example was used to measure the bulk density from the weight thereof in a 100 mL vessel using a bulk specific gravity measurement apparatus described in JIS K-6720. The powder of the vinyl chloride resin composition loaded into the 100 mL vessel that was obtained during the above was returned to the bulk specific gravity measurement apparatus, and the time taken for all of the powder to flow when a damper was opened soon thereafter was measured to determine the number of seconds to fall. Note that an evaluation of "does not flow" was given in a case in which flow of the powder was not complete even after 1 minute of waiting. Moreover, the operations described above were each performed at normal temperature (23°C). Furthermore, a smaller number of seconds to fall indicates that the vinyl chloride resin composition has better powder fluidity at normal temperature.

### <Surface stickiness>

The surface stickiness of a vinyl chloride resin molded sheet obtained in each example or comparative example was evaluated as follows through measurement of the coefficient of kinetic friction.

Specifically, a texture tester (produced by Trinity-Lab Inc.; product name: TL201Ts) was used to measure the coefficient of kinetic friction of the surface of a vinyl chloride resin molded sheet prior to formation of a laminate by bringing a haptic contactor into contact with the vinyl chloride resin molded sheet under conditions of a load of 50 g, a speed of 10 mm/s, a test range of 50 mm, and a measurement range of 30 mm (excluding 10 mm at the start and the end of the test range) in a measurement environment having a temperature of 23°C and a relative humidity of 50%. A smaller value for the coefficient of kinetic friction indicates that surface stickiness of the vinyl chloride resin molded product is suppressed.

### <Low-temperature tensile elongation>

### [Initial (pre-heating)]

A vinyl chloride resin molded sheet obtained in each example or comparative example was punched out with a No. 1 dumbbell described in JIS K6251, and then tensile breaking elongation (%) at a low temperature of -10°C was measured in accordance with JIS K7113 at a tensing rate of 200 mm/min. A larger value for the tensile breaking elongation at low temperature indicates that the vinyl chloride resin molded sheet has better low-temperature tensile elongation.

### [Post-heating (heat aging test)]

A laminate having a vinyl chloride resin molded sheet lined with a foamed polyurethane molded product that was obtained in each example or comparative example was used as a sample. The sample was placed inside an oven and was heated in an environment having a temperature of 120°C for 400 hours. Next, the foamed polyurethane molded product was peeled from the post-heating laminate to prepare just a vinyl chloride resin molded sheet. The tensile breaking elongation (%) of the vinyl chloride resin molded sheet at a low temperature of -10°C after 400 hours of heating at 120°C was then measured in the same manner as for the initial (pre-heating) state described above.

### (Production examples)

Polyesters A to F used in the examples were produced according to the following Production Examples 1 to 6.

### <Production Example 1>

A polyester resin A was produced by subjecting terephthalic acid and isophthalic acid as dicarboxylic acids and 1,4-butanediol and polyoxytetramethylene glycol as glycols to an esterification reaction at 150°C to 250°C and subsequently to polycondensation at 230°C to 300°C under reduced pressure by a standard method.

The number-average molecular weight, weight-average molecular weight, melting point, and chemical composition of the obtained polyester resin A were measured. The results are shown in Table 1.

### <Production Examples 2 to 6>

Polyester resins B to F were produced and various measurements were performed in the same way as in Production Example 1 with the exception that the types and/or amounts of the dicarboxylic acids and glycols that were used were changed such that the chemical composition of the obtained polyester resin was as indicated in Table 1. The results are shown in Table 1.

### (Example 1)

### <Production of vinyl chloride resin composition>

With the exception of plasticizers (polyester plasticizer and epoxidized soybean oil) and vinyl chloride resin fine particles used as a dusting agent, components indicated in Tables 2 and 3 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as the dusting agent were added to the mixture to produce a vinyl chloride resin composition.

The obtained vinyl chloride resin composition was used to evaluate powder fluidity. The result is shown in Table 2.

### <Formation of vinyl chloride resin molded product>

The obtained vinyl chloride resin composition was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet of 145 mm × 175 mm × 1 mm was removed from the mold as a vinyl chloride resin molded product.

The obtained vinyl chloride resin composition product was used to evaluate surface stickiness and low-temperature tensile elongation (initial). The results are shown in Table 2.

### <Formation of laminate>

The obtained vinyl chloride resin molded sheet was cut out as 100 mm × 100 mm. Two cut-out vinyl chloride resin molded sheets were arranged inside of a 200 mm × 300 mm × 10 mm mold such as to not overlap with each other and with the textured surface facing downward.

Separately thereto, a polyol mixture containing 50 parts by mass of a propylene oxide/ethylene oxide (PO/EO) block adduct of propylene glycol (hydroxyl value: 28; terminal EO unit content: 10%; internal EO unit content: 4%), 50 parts by mass of a PO/EO block adduct of glycerin (hydroxyl value: 21; terminal EO unit content: 14%), 2.5 parts by mass of water, 0.2 parts by mass of an ethylene glycol solution of triethylenediamine (produced by Tosoh Corporation; product name: TEDA-L33), 1.2 parts by mass of triethanolamine, 0.5 parts by mass of triethylamine, and 0.5 parts by mass of a foam stabilizer (produced by Shin-Etsu Chemical Co., Ltd.; product name: F-122) was mixed with polymethylene polyphenylene polyisocyanate (polymeric MDI) in a ratio determined to give an index of 98 so as to prepare a mixed liquid. The prepared mixed liquid was poured onto the two vinyl chloride resin molded sheets that had been placed in the mold as described above. Thereafter, the mold was covered by a 348 mm × 255 mm × 10 mm aluminum plate to seal the mold. Once 5 minutes had passed after sealing, a laminate in which a vinyl chloride resin molded sheet of 1 mm in thickness was lined with a foamed polyurethane molded product was removed from the mold, and low-temperature tensile elongation (post-heating) was evaluated for the vinyl chloride resin molded sheet in the laminate. The result is shown in Table 2.

### (Examples 2 to 12 and Comparative Examples 1 to 3)

A vinyl chloride resin composition, a vinyl chloride resin molded product, and a laminate were produced and various evaluations were performed in the same way as in Example 1 with the exception that the formulation was changed as indicated in Tables 2 and 3. The results are shown in Tables 2 and 3.

**[Table 1]**

| Production examples | Polyester resin | Number-average molecular weight (Mn) | Weight-average molecular weight (Mw) | Melting point [°C] | Chemical composition | | | | | | | | | |
|---|---|---|---|---|---|---|---|---|---|---|---|---|---|---|
| | | | | | Dicarboxylic acid-derived structural units | | | | | Alkylene oxide structural units | | | | |
| | | | | | | | | | | Alkylene glycol-derived alkylene oxide structural units | | | Polyoxyalkylene glycol-derived alkylene oxide structural units | |
| | | | | | Terephthalic acid-derived structural units [mol%] | Isophthalic acid-derived structural units [mol%] | Adipic acid-derived structural units [mol%] | 1,4-Cyclohexane dicarboxylic acid-derived structural units [mol%] | Azelaic acid-derived structural units [mol%] | 1,4-Butanediolderived tetramethylene oxide structural units [mol%] | Ethylene glycol-derived ethylene oxide structural units [mol%] | Neopentyl glycol-derived 2,2-dimethylpropylene oxide structural units [mol%] | Polyoxytetramethylene glycol-derived tetramethylene oxide structural units [mol%] | Diethylene glycol-derived ethylene oxide structural units [mol%] |
| Production Example 1 | A | 11648 | 16973 | 139 | 20 | 10 | - | - | - | 27 | - | - | 43 | - |
| Production Example 2 | B | 32341 | 57817 | 112 | 27 | 19 | - | - | - | 29 | 19 | - | 6 | - |
| Production Example 3 | C | 33418 | 61703 | 126 | 16 | 8 | - | - | - | 20 | - | - | 56 | - |
| Production Example 4 | D | 40983 | 68164 | 107 | 16 | - | - | 15 | - | 30 | - | - | 39 | - |
| Production Example 5 | E | 27174 | 47622 | 96 | 17 | 10 | 22 | - | - | 51 | - | - | - | - |
| Production Example 6 | F | 45421 | 85846 | Not measurable | 16 | 10 | - | - | 24 | - | 26 | 23.6 | - | 0.4 |

**[Table 2]**

| | | | | | Comparative Example 1 | Example 1 | Example 2 | Example 3 | Example 4 | Example 5 | Example 6 |
|---|---|---|---|---|---|---|---|---|---|---|---|
| | Vinyl chloride resin | | Vinyl chloride resin particles⁽¹⁾ [parts by mass] | | 100 | 100 | 100 | 100 | 100 | 100 | 100 |
| | | | Vinyl chloride resin particles⁽²⁾ [parts by mass] | | - | - | - | - | - | - | - |
| | | | Vinyl chloride resin fine particles⁽³⁾ [parts by mass] | | 16 | 16 | 16 | 16 | 16 | 16 | 16 |
| | Polyester plasticizer | | Adipic acid polyester (number-average molecular weight Mn: 3,626)⁽⁴⁾ [parts by mass] | | 120 | 120 | 120 | 120 | 120 | 120 | 120 |
| | Other plasticizer | | Epoxidized soybean oil⁵⁾ [parts by mass] | | 5 | 5 | 5 | 5 | 5 | 5 | 5 |
| | Stabilizer | | Perchloric acid-substituted hydrotalcite⁽⁶⁾ [parts by mass] | | 2.5 | 2.5 | 2.5 | 2.5 | 2.5 | 2.5 | 2.5 |
| | | | Zeolite⁽⁷⁾ [parts by mass] | | 1.2 | 1.2 | 1.2 | 1.2 | 1.2 | 1.2 | 1.2 |
| | | | β-Diketone (stearoyl benzoyl methane)⁽⁸⁾ [parts by mass] | | 0.5 | 0.5 | 0.5 | 0.5 | 0.5 | 0.5 | 0.5 |
| Formulation | | | Zinc stearate⁽⁹⁾ [parts by mass] | | 0.2 | 0.2 | 0.2 | 0.2 | 0.2 | 0.2 | 0.2 |
| | Polyester resin | | Polyester resin A (number-average molecular weight Mn: 11,648) [parts by mass] | | - | 10 | - | - | - | - | - |
| | | | Polyester resin B (number-average molecular weight Mn: 32,341) [parts by mass] | | - | - | 10 | - | - | - | - |
| | | | Polyester resin C (number-average molecular weight Mn: 33,418) [parts by mass] | | - | - | - | 10 | - | - | - |
| | | | Polyester resin D (number-average molecular weight Mn: 40,983) [parts by mass] | | - | - | - | - | 10 | - | - |
| | | | Polyester resin E (number-average molecular weight Mn: 27,174) [parts by mass] | | - | - | - | - | - | 10 | - |
| | | | Polyester resin F (number-average molecular weight Mn: 45,421) [parts by mass] | | - | - | - | - | - | - | 10 |
| | Mold release agent | | 12-Hydroxystearic acid oligomer⁽¹⁰⁾ [parts by mass] | | 0.6 | 0.6 | 0.6 | 0.6 | 0.6 | 0.6 | 0.6 |
| | Amide compound | | Ethylene bisoleamide⁽¹¹⁾ [parts by mass] | | 0.5 | 0.5 | 0.5 | 0.5 | 0.5 | 0.5 | 0.5 |
| | Silicone oil | | Unmodified silicone oil⁽¹²⁾ [parts by mass] | | 0.4 | 0.4 | 0.4 | 0.4 | 0.4 | 0.4 | 0.4 |
| | Pigment | | Black⁽¹³⁾ [parts by mass] | | 1.1 | 1.1 | 1.1 | 1.1 | 1.1 | 1.1 | 1.1 |
| Content relative to 100 parts by mass of vinyl chloride resin | | | Polyester plasticizer [parts by mass] | | 103.4 | 103.4 | 103.4 | 103.4 | 103.4 | 103.4 | 103.4 |
| | | | Other plasticizer [parts by mass] | | 4.3 | 4.3 | 4.3 | 4.3 | 4.3 | 4.3 | 4.3 |
| | | | Polyester resin [parts by mass] | | - | 8.62 | 8.62 | 8.62 | 8.62 | 8.62 | 8.62 |
| Content relative to 100 parts by mass of polyester plasticizer | | | Other plasticizer [parts by mass] | | 4.2 | 4.2 | 4.2 | 4.2 | 4.2 | 4.2 | 4.2 |
| | | | Polyester resin [parts by mass] | | - | 8.33 | 8.33 | 8.33 | 8.33 | 8.33 | 8.33 |
| Evaluation results | | Powder fluidity | | No. of seconds to fall [s] | 13.2 | 12.9 | 12.5 | 13.0 | 12.2 | 12.3 | 12.0 |
| | | | | Bulk density [g/cm³] | 0.59 | 0.59 | 0.58 | 0.59 | 0.59 | 0.59 | 0.59 |
| | | Tensile breaking elongation at low temperature (-10°C) | | Initial [%] | 235 | 259 | 254 | 263 | 265 | 254 | 249 |
| | | | | After 400 hours heating at 120°C [%] | 219 | 238 | 239 | 244 | 245 | 231 | 237 |
| | | Coefficient of kinetic friction | | | 0.48 | 0.43 | 0.44 | 0.41 | 0.46 | 0.45 | 0.45 |

**[Table 3]**

| | | | | | Comparative Example 2 | Example 7 | Example 8 | Example 9 | Example 10 | Example 11 | Comparative Example 3 | Example 12 |
|---|---|---|---|---|---|---|---|---|---|---|---|---|
| | Vinyl chloride resin | | Vinyl chloride resin particles⁽¹⁾ [parts by mass] | | 100 | 100 | 100 | 100 | 100 | 100 | - | - |
| | | | Vinyl chloride resin particles⁽²⁾ [parts by mass] | | - | - | - | - | - | - | 100 | 100 |
| | | | Vinyl chloride resin fine particles⁽³⁾ [parts by mass] | | 16 | 16 | 16 | 16 | 16 | 16 | 16 | 16 |
| | Polyester plasticizer | | Adipic acid polyester (number-average molecular weight Mn: 3,626)⁽⁴⁾ [parts by mass] | | 120 | 120 | 120 | 120 | 120 | 120 | 100 | 100 |
| | Other plasticizer | | Epoxidized soybean oil⁽⁵⁾ [parts by mass] | | 5 | 5 | 5 | 5 | 5 | 5 | 5 | 5 |
| | Stabilizer | | Perchloric acid-substituted hydrotalcite⁽⁶⁾ [parts by mass] | | 2.5 | 2.5 | 2.5 | 2.5 | 2.5 | 2.5 | 2.5 | 2.5 |
| | | | Zeolite⁽⁷⁾ [parts by mass] | | 1.2 | 1.2 | 1.2 | 1.2 | 1.2 | 1.2 | 1.2 | 1.2 |
| | | | β-Diketone (stearoyl benzoyl methane)⁽⁸⁾ [parts by mass] | | 0.5 | 0.5 | 0.5 | 0.5 | 0.5 | 0.5 | 0.5 | 0.5 |
| Formulation | | | Zinc stearate⁽⁹⁾ [parts by mass] | | 0.2 | 0.2 | 0.2 | 0.2 | 0.2 | 0.2 | 0.2 | 0.2 |
| | Polyester resin | | Polyester resin A (number-average molecular weight Mn: 11,648) [parts by mass] | | - | - | - | - | - | - | - | - |
| | | | Polyester resin B (number-average molecular weight Mn: 32,341) [parts by mass] | | - | - | - | - | - | - | - | - |
| | | | Polyester resin C (number-average molecular weight Mn: 33,418) [parts by mass] | | - | 3 | 5 | 10 | 20 | - | - | 10 |
| | | | Polyester resin D (number-average molecular weight Mn: 40,983) [parts by mass] | | - | - | - | - | - | 20 | - | - |
| | | | Polyester resin E (number-average molecular weight Mn: 27,174) [parts by mass] | | - | - | - | - | - | - | - | - |
| | | | Polyester resin F (number-average molecular weight Mn: 45,421) [parts by mass] | | - | - | - | - | - | - | - | - |
| | Mold release agent | | 12-Hydroxystearic acid oligomer⁽¹⁰⁾ [parts by mass] | | 1.2 | 1.2 | 1.2 | 1.2 | 1.2 | 1.2 | 1.2 | 1.2 |
| | Amide compound | | Ethylene bisoleamide^{™ (11)} [parts by mass] | | 0.5 | 0.5 | 0.5 | 0.5 | 0.5 | 0.5 | 0.5 | 0.5 |
| | Silicone oil | | Unmodified silicone oil⁽¹²⁾ [parts by mass] | | - | - | - | - | - | - | - | - |
| | Pigment | | Black⁽¹³⁾ [parts by mass] | | 1.1 | 1.1 | 1.1 | 1.1 | 1.1 | 1.1 | 1.1 | 1.1 |
| Content relative to 100 parts by mass of vinyl chloride resin | | | Polyester plasticizer [parts by mass] | | 103.4 | 103.4 | 103.4 | 103.4 | 103.4 | 103.4 | 86.2 | 86.2 |
| | | | Other plasticizer [parts by mass] | | 4.3 | 4.3 | 4.3 | 4.3 | 4.3 | 4.3 | 4.3 | 4.3 |
| | | | Polyester resin [parts by mass] | | - | 2.59 | 4.31 | 8.62 | 17.24 | 17.24 | - | 8.62 |
| Content relative to 100 parts by mass of polyester plasticizer | | | Other plasticizer [parts by mass] | | 4.2 | 4.2 | 4.2 | 4.2 | 4.2 | 4.2 | 5.0 | 5.0 |
| | | | Polyester resin [parts by mass] | | - | 2.50 | 4.17 | 8.33 | 16.67 | 16.67 | - | 10.00 |
| Evaluation results | | Powder fluidity | | No. of seconds to fall [s] | 14.9 | 14.4 | 13.9 | 13.7 | Not measurable | 12.7 | 16.3 | 13.4 |
| | | | | Bulk density [g/cm³] | 0.57 | 0.57 | 0.56 | 0.55 | Not measurable | 0.53 | 0.57 | 0.53 |
| | | Tensile breaking elongation at low temperature (-10°C) | | Initial [%] | 244 | 244 | 250 | 265 | 265 | 268 | 202 | 212 |
| | | | | After 400 hours heating at 120°C [%] | 217 | 230 | 227 | 247 | 228 | 256 | 178 | 188 |
| | | Coefficient of kinetic friction | | | 0.87 | 0.70 | 0.65 | 0.59 | 0.51 | 0.64 | 0.57 | 0.47 |

(1) Product name: ZEST^{®} (ZEST is a registered trademark in Japan, other countries, or both) 1700ZI (produced by suspension polymerization; average degree of polymerization: 1,700; average particle diameter: 145 µm); produced by Shin Dai-ichi Vinyl Corporation
(2) Product name: ZEST^{®} 1300SI (produced by suspension polymerization; average degree of polymerization: 1,300; average particle diameter: 118 µm); produced by Shin Dai-ichi Vinyl Corporation
(3) Product name: ZEST PQLTX (produced by emulsion polymerization; average degree of polymerization: 800; average particle diameter: 1.8 µm); produced by Shin Dai-ichi Vinyl Corporation
(4) Product name: ADK CIZER HPN-3130 (adipic acid polyester; number-average molecular weight (Mn): 3,626; viscosity: 4,000 mPa·s); produced by Adeka Corporation
(5) Product name: ADK CIZER O-130S; produced by Adeka Corporation
(6) Product name: ALCAMIZER^{®} 5 (ALCAMIZER is a registered trademark in Japan, other countries, or both); produced by Kyowa Chemical Industry Co., Ltd.
(7) Product name: MIZUKALIZER DS; produced by Mizusawa Industrial Chemicals, Ltd.
(8) Product name: Karenz DK-1; produced by Showa Denko K.K.
(9) Product name: SAKAI SZ2000; produced by Sakai Chemical Industry Co., Ltd.
(10) Product name: ADK STAB LS-12; produced by Adeka Corporation
(11) Product name: SLIPACKS^{®} O (SLIPACKS is a registered trademark in Japan, other countries, or both); produced by Nippon Kasei Chemical Co., Ltd.
(12) Product name: KF-96H-300,000cs (unmodified silicone oil (polydimethylsiloxane); viscosity: 30 × 10⁴ cs); produced by Shin-Etsu Silicone
(13) Product name: DAP 4720 Black; produced by Dainichiseika Color and Chemicals Mfg. Co., Ltd.

It can be seen from Tables 1 to 3 that a vinyl chloride resin molded product having excellent low-temperature tensile elongation can be formed when using the vinyl chloride resin compositions of Examples 1 to 12, which each contain a vinyl chloride resin, a polyester plasticizer having a number-average molecular weight of less than a specific value, and a polyester resin having a number-average molecular weight of not less than a specific value.

In contrast, it can be seen that low-temperature tensile elongation is poor in the case of vinyl chloride resin molded products formed using the vinyl chloride resin compositions of Comparative Examples 1 to 3, which each contain a polyester plasticizer having a number-average molecular weight of less than a specific value but do not contain a polyester resin having a number-average molecular weight of not less than a specific value.

### INDUSTRIAL APPLICABILITY

According to the present disclosure, it is possible to provide a vinyl chloride resin composition that is capable of forming a vinyl chloride resin molded product having excellent low-temperature tensile elongation.

Moreover, according to the present disclosure, it is possible to provide a vinyl chloride resin molded product having excellent low-temperature tensile elongation.

Furthermore, according to the present disclosure, it is possible to provide a laminate including this vinyl chloride resin molded product.

## Claims

1. A vinyl chloride resin composition comprising:
a vinyl chloride resin;
a polyester plasticizer having a number-average molecular weight of less than 8,000; and
a polyester resin having a number-average molecular weight of 8,000 or more.

2. The vinyl chloride resin composition according to claim 1, wherein content of the polyester resin is not less than 0.1 parts by mass and not more than 50 parts by mass relative to 100 parts by mass of the vinyl chloride resin.

3. The vinyl chloride resin composition according to claim 1, wherein the polyester resin includes a structural unit derived from a dicarboxylic acid and an alkylene oxide structural unit.

4. The vinyl chloride resin composition according to claim 3, wherein the dicarboxylic acid includes an aromatic dicarboxylic acid.

5. The vinyl chloride resin composition according to claim 4, wherein the aromatic dicarboxylic acid includes at least one of terephthalic acid and isophthalic acid.

6. The vinyl chloride resin composition according to claim 3, wherein the alkylene oxide structural unit includes one or more selected from the group consisting of an ethylene oxide structural unit, a tetramethylene oxide structural unit, and a 2,2-dimethylpropylene oxide structural unit.

7. The vinyl chloride resin composition according to claim 3, wherein the polyester resin includes a polyalkylene oxide region where the alkylene oxide structural unit is consecutively arranged.

8. The vinyl chloride resin composition according to claim 7, wherein a proportion constituted by the alkylene oxide structural unit included in the polyalkylene oxide region is not less than 5 mol% and not more than 80 mol% when all structural units in the polyester resin are taken to be 100 mol%.

9. The vinyl chloride resin composition according to claim 1, wherein content of the polyester plasticizer is not less than 30 parts by mass and not more than 200 parts by mass relative to 100 parts by mass of the vinyl chloride resin.

10. The vinyl chloride resin composition according to claim 1 used in powder molding.

11. The vinyl chloride resin composition according to claim 1 used in powder slush molding.

12. A vinyl chloride resin molded product obtained through molding of the vinyl chloride resin composition according to any one of claims 1 to 11.

13. The vinyl chloride resin molded product according to claim 12 for a surface skin of an automobile instrument panel.

14. A laminate comprising:
a foamed polyurethane molded product; and
the vinyl chloride resin molded product according to claim 12.

15. The laminate according to claim 14 for an automobile instrument panel.
